(19) Europäisches Patentamt / European Patent Office / Office européen des brevets

(11) **EP 2 992 193 B1**

(12) **FASCICULE DE BREVET EUROPEEN**

(45) Date de publication et mention de la délivrance du brevet:
**07.02.2018 Bulletin 2018/06**

(21) Numéro de dépôt: **14720673.4**

(22) Date de dépôt: **10.04.2014**

(51) Int Cl.:
*F01N 9/00* *(2006.01)*      *F01N 11/00* *(2006.01)*

(86) Numéro de dépôt international:
**PCT/FR2014/050857**

(87) Numéro de publication internationale:
**WO 2014/177785 (06.11.2014 Gazette 2014/45)**

(54) **DISPOSITIF ET PROCÉDÉ DE CONTRÔLE DE L'ÉTAT DE FONCTIONNEMENT D'UN ORGANE DE TRAITEMENT D'EFFLUENTS GAZEUX D'UNE LIGNE D'ÉCHAPPEMENT D'UN MOTEUR À COMBUSTION INTERNE**

VORRICHTUNG UND VERFAHREN ZUR ÜBERWACHUNG DES FUNKTIONSZUSTANDES EINES ORGANS ZUR BEHANDLUNG VON GASFÖRMIGEN EMISSIONEN EINER ABGASANLAGE EINER BRENNKRAFTMASCHINE

DEVICE AND METHOD FOR MONITORING A TREATMENT COMPONENT FOR GASEOUS EMISSIONS OF AN EXHAUST SYSTEM OF AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2013 FR 1353962**

(43) Date de publication de la demande:
**09.03.2016 Bulletin 2016/10**

(73) Titulaire: **Renault S.A.S.**
**92100 Boulogne-Billancourt (FR)**

(72) Inventeurs:
• **LE-BRAS, Ronan**
  **F-75012 Paris (FR)**
• **LEPORCQ, Michel**
  **F-91700 Sainte Genevieve des Bois (FR)**
• **RADENAC, Erwan**
  **F-78730 Rochefort en Yvelines (FR)**
• **SAMUT, Fabrice**
  **F-75012 Paris (FR)**

(56) Documents cités:
EP-A2- 1 052 385      WO-A1-01/49987
DE-A1- 4 122 787      US-A1- 2005 279 156

**Description**

La présente invention concerne le contrôle de l'état de fonctionnement d'une ligne d'échappement d'un moteur à combustion interne d'un véhicule automobile et, en particulier, la détection du vieillissement de l'organe de traitement d'effluents gazeux dont est pourvue la ligne d'échappement, tel que par exemple un convertisseur catalytique.

Plus particulièrement, l'invention concerne la surveillance de l'efficacité catalytique d'un organe de purification des gaz d'échappement d'un moteur à combustion interne. Un tel organe est généralement appelé « convertisseur catalytique » ou « catalyseur ».

Les moteurs à combustion interne produisent des gaz d'échappement qui contiennent des substances polluantes telles que des oxydes d'azote, des hydrocarbures imbrûlés (HC) ou du monoxyde de carbone (CO). Il est nécessaire de traiter ces substances polluantes avant de les évacuer dans l'atmosphère. Les véhicules automobiles sont pourvus, à cet effet, d'un convertisseur catalytique installé dans la ligne d'échappement du moteur, afin d'oxyder les molécules réductrices constituées par le monoxyde de carbone (CO) et les hydrocarbures imbrûlés (HC).

Le vieillissement thermique progressif de tels convertisseurs catalytiques engendre une baisse de l'efficacité de conversion des hydrocarbures imbrûlés et du monoxyde de carbone en eau et en dioxyde de carbone, due entre autre à la diminution de la surface active de traitement des polluants au sein du convertisseur catalytique. Il en résulte une augmentation de la température d'amorçage thermique des réactions d'oxydation, et donc une augmentation des émissions polluantes. En effet, lorsque le convertisseur catalytique est disposé en amont d'un filtre à particules, il apporte une aide à la régénération du filtre, de sorte qu'une forte dégradation du convertisseur peut conduire à l'impossibilité de régénérer le filtre à particules.

Il est donc nécessaire de contrôler le bon fonctionnement du convertisseur catalytique. A cet effet, les véhicules automobiles sont généralement pourvus d'un dispositif de contrôle de son état, apte à signaler tout dysfonctionnement au conducteur.

Dans l'état de la technique, le contrôle du vieillissement ou, de manière générale, le contrôle du bon fonctionnement de la phase catalytique d'une ligne d'échappement est basé sur l'augmentation de la température générée par l'activité catalytique de l'organe à diagnostiquer suite à une excitation forcée de la phase catalytique par une augmentation maîtrisée de la concentration de réducteurs en amont de la phase catalytique engendrée par une injection de carburant en amont du convertisseur catalytique.

En provoquant une injection tardive de carburant dans les cylindres du moteur, la température en sortie du convertisseur catalytique en fonctionnement normal augmente, alors que si le convertisseur catalytique est défaillant, la température de sortie n'augmente pas.

On peut se référer à cet égard au document EP 1 323 905 qui décrit un procédé de contrôle de l'état de fonctionnement d'un convertisseur catalytique d'une ligne d'échappement d'un moteur à combustion interne, comprenant une étape d'excitation du convertisseur par injection de carburant dans la ligne d'échappement et une étape de contrôle de la valeur d'une variable représentative de la quantité de chaleur dégagée par une réaction d'oxydation au sein du convertisseur catalytique.

La surveillance d'une fonction oxydante intégrée à un organe de dépollution placé dans la ligne d'échappement repose sur l'utilisation d'une injection tardive chargée d'envoyer les hydrocarbures réducteurs sur la phase catalytique oxydante. La réaction d'oxydation génère alors une réaction exothermique.

Toutefois, un tel procédé induit un risque de dilution de l'huile de lubrification par le carburant injecté dans la chambre ainsi qu'un risque de pollution par les hydrocarbures réducteurs résultants d'une oxydation des hydrocarbures qui est rarement totale.

Afin de surveiller l'efficacité catalytique d'un organe intégrant une fonction d'oxydation des hydrocarbures imbrûlés, le document FR 2 918 113 propose un procédé de diagnostic de l'état de fonctionnement d'un convertisseur catalytique comprenant l'excitation du convertisseur par injection de carburant dans un intervalle de températures compris entre la température d'amorçage d'un convertisseur catalytique neuf de référence et la température d'amorçage d'un convertisseur catalytique usagé de référence.

On peut se référer également au document FR 2 914 693 qui décrit un procédé de diagnostic du fonctionnement d'un organe de traitement d'effluents gazeux dans lequel on excite l'organe de traitement par injection de carburant et l'on surveille l'élévation de température de sortie de l'organe de traitement en élaborant un critère de test par comparaison d'une température de sortie calculée d'un modèle d'organe de traitement défaillant avec la température mesurée et en comparant le critère de test avec une valeur de seuil traduisant une baisse de performance de l'organe de traitement. Ainsi, si l'écart entre la température mesurée et la température modélisée est quasiment nul alors le convertisseur catalytique est défaillant.

Toutefois, ces documents se basent sur la mesure ou l'estimation de la température d'amorçage du convertisseur catalytique qui se décale vers des températures plus importantes en fonction de son vieillissement. Lorsque la température du convertisseur catalytique est inférieure à la température d'amorçage, le convertisseur catalytique n'est pas amorcé et ne permet pas de traiter des hydrocarbures imbrûlés qui le traversent. A l'inverse, si la température du convertisseur catalytique est supérieure à la température d'amorçage, le convertisseur catalytique est amorcé et peut traiter des hydrocarbures imbrûlés qui le traversent. La plage de température dans lequel un convertisseur catalytique fonctionnel est amorcé est ainsi différente de la plage de température dans lequel un convertisseur catalytique est défaillant.

Les procédés de diagnostic actuels se décomposent en trois étapes, telles que l'étape de stabilisation, l'étape de post-injection et l'étape de calcul. L'étape de stabilisation permet de s'assurer que les conditions de fonctionnement du moteur sont satisfaites afin d'exécuter un bon diagnostic. L'étape de post-injection permet la génération d'une réaction exothermique d'oxydation des hydrocarbures imbrûlés dans le convertisseur catalytique. L'étape de calcul permet de quantifier l'augmentation de température générée par la réaction exothermique par intégration de l'écart entre la température mesurée en sortie d'un convertisseur catalytique et la température modélisée d'un convertisseur catalytique défaillant. La valeur de l'intégrale détermine le critère de diagnostic permettant de distinguer un convertisseur catalytique défaillant d'un convertisseur catalytique en bon état.

De tels procédés de diagnostic ne sont pas robustes aux variations de quantités d'hydrocarbures émises par la combustion en fonction du fonctionnement du moteur et des conditions environnementales. On obtient ainsi des critères de diagnostic très larges ne permettant plus de respecter les objectifs de fiabilité imposés par la norme européenne en vigueur « EURO 6 » concernant les systèmes de diagnostic embarqués, dits « On-board diagnostic system » en termes anglo-saxons.

On peut se référer au document EP 1 052 385 qui décrit un dispositif de contrôle de l'état de fonctionnement d'un organe de traitement d'effluents gazeux d'une ligne d'échappement dans un moteur à combustion interne comprenant une unité de commande comportant un module de vérification des conditions de fonctionnement du moteur, un module d'injection de carburant en amont de l'organe de traitement et un module de diagnostic comportant un modèle d'organe de traitement dépourvu d'activité catalytique et un module de calcul d'un écart entre la température de sortie dudit modèle et une valeur mesurée de température de sortie de l'organe de traitement, le module de diagnostic comprenant un module d'élaboration d'un critère de diagnostic en fonction de l'écart de température, d'un coefficient du débit de carburant injecté dans le moteur et du débit d'air dans le système d'admission du moteur. Ce critère de diagnostic n'utilise pas une valeur de richesse du mélange air - carburant mesurée par un capteur d'oxygène situé en amont de l'organe de traitement.

La présente invention a pour objectif d'améliorer les procédés et dispositifs de diagnostic connus permettant, en particulier de s'affranchir des différences de comportements thermiques d'un organe de traitement à l'autre.

L'invention propose un contrôle de l'état de fonctionnement d'un convertisseur catalytique particulièrement fiable et précis.

L'invention a pour objet un procédé de détection du dysfonctionnement d'un convertisseur catalytique en fonction de la richesse d'un mélange air/carburant admis dans un moteur thermique de véhicule automobile à allumage et injection piloté électroniquement.

L'invention s'applique avantageusement aux moteurs à combustion interne comportant quatre cylindres, et peut s'appliquer à tous les moteurs comportant N cylindres.

Afin de déterminer la richesse d'un mélange air/carburant, on utilise un capteur d'oxygène de type « proportionnel ».

Capable de mesurer très précisément la teneur en oxygène des gaz d'échappement et de doser de manière extrêmement fine la quantité de carburant injectée, un tel capteur d'oxygène proportionnel permet de maîtriser les émissions du moteur en exploitant pleinement les capacités du pot catalytique. La tension de sortie des capteurs d'oxygène proportionnels varie proportionnellement à la richesse du mélange air/carburant.

L'invention a pour objet un dispositif de contrôle de l'état de fonctionnement d'un organe de traitement d'effluents gazeux d'une ligne d'échappement dans un moteur à combustion interne, du type Diesel, comprenant une unité de commande comportant un module de vérification des conditions de fonctionnement du moteur, un module d'injection de carburant en amont de l'organe de traitement et un module de diagnostic de l'organe de traitement. Ledit module de diagnostic comporte un modèle d'organe de traitement dépourvu d'activité catalytique et un module de calcul d'un écart entre la température de sortie dudit modèle et une valeur mesurée de température de sortie de l'organe de traitement.

Le module de diagnostic comprend un module d'élaboration d'un critère de diagnostic en fonction de l'écart de température et d'une valeur de richesse du mélange air/carburant mesurée par un capteur d'oxygène situé en amont de l'organe de traitement.

Ainsi, on s'affranchit des variations de la température et de richesse du mélange air/carburant en fonction du fonctionnement du moteur et des conditions environnementales. Le diagnostic est ainsi plus fiable et plus robuste.

Avantageusement, le module de diagnostic comprend un module de comparaison du critère de diagnostic avec une valeur de seuil traduisant de la baisse de performance de l'organe de traitement.

Le critère de diagnostic est, par exemple, fonction de la valeur moyenne de richesse et correspond à intégrale de l'écart de température divisé par la valeur moyenne de la richesse.

Dans un mode de réalisation, la quantité de carburant est maintenue constante lors de l'excitation.

Le capteur d'oxygène est, par exemple, situé en aval d'une turbine du système de turbo compression du moteur.

Selon un deuxième aspect, l'invention concerne un procédé de contrôle de l'état de fonctionnement d'un organe de traitement d'effluents gazeux d'une ligne d'échappement dans un moteur à combustion interne de véhicule automobile, dans lequel on excite l'organe de traitement par injection de carburant en amont de l'organe de traitement et on calcule un écart entre une température de sortie d'un modèle d'organe de traitement dépourvu d'activité catalytique et une valeur mesurée de température de sortie de l'organe de traitement.

Lors du procédé, on élabore un critère de diagnostic en fonction de l'écart de température calculé et de la valeur de richesse du mélange air/carburant mesurée par un capteur d'oxygène situé en amont de l'organe de traitement.

Avantageusement, on compare le critère de diagnostic avec une valeur de seuil traduisant de la baisse de performance de l'organe de traitement.

Par exemple, on calcule le critère de diagnostic en fonction de la valeur moyenne de richesse, notamment par intégration de l'écart de température divisé par la valeur moyenne de la richesse.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 illustre, de manière schématique, la structure d'un moteur à combustion interne d'un moteur automobile équipé d'une ligne d'échappement pourvue d'un convertisseur catalytique associé à un dispositif de diagnostic selon l'invention ;
- la figure 2 illustre en détail le module de diagnostic selon la figure 1 ; et
- la figure 3 représente un mode de mise en oeuvre du procédé selon l'invention.

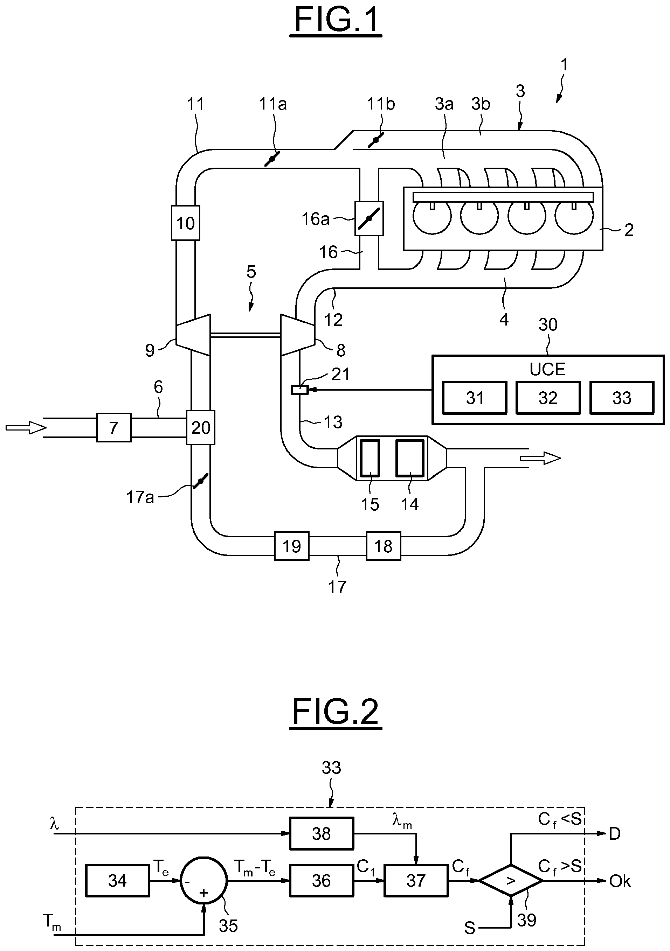

Sur la figure 1, on a représenté, de manière schématique et à titre d'exemple, la structure générale d'un moteur à combustion interne 1 d'un véhicule automobile.

Dans l'exemple illustré, le moteur à combustion interne 1 comprend quatre cylindres 2 en ligne, un collecteur d'admission d'air frais 3, un collecteur d'échappement 4 et un système de turbo compression 5.

Les cylindres 2 sont alimentés en air par l'intermédiaire du répartiteur d'admission 3, lui-même alimenté par une conduite 6 pourvue d'un filtre à air 7 et du turbocompresseur 5 de suralimentation du moteur 1 en air.

Le turbocompresseur 5 comporte essentiellement une turbine 8 entraînée par les gaz d'échappement et un compresseur 9 monté sur le même axe que la turbine 8 et assurant une compression de l'air distribué par le filtre à air 7, dans le but d'augmenter la quantité d'air admise dans les cylindres 2 du moteur 1. Un échangeur thermique 10 peut être placé après la sortie du compresseur 9 équipant la conduite 11 d'alimentation du collecteur d'admission 3 en air frais.

Tel qu'illustré et à titre d'exemple non limitatif, la conduite d'admission d'air 11 comprend une soupape d'admission principale 11a afin de réguler le débit du flux d'air entrant dans le collecteur d'admission 3 et une deuxième soupape d'admission d'air 11b appelée « volet de swirl » orientable, permettant d'accroître la turbulence ou l'effet de tourbillon sur le mélange entrant dans la chambre de combustion. Cette deuxième soupape 11b est disposée dans une deuxième conduite 3b du collecteur d'admission d'air 3 parallèle à la conduite principale 3a du collecteur d'admission d'air 3 et alimente les mêmes cylindres 2. La deuxième soupape 11b, fermée à charge partielle, permet de couper le débit de la soupape d'admission principale 11a en l'orientant vers la deuxième conduite d'admission d'air 3b et reste ouverte à pleine puissance pour admettre le maximum d'air. L'effet de tourbillon réduit significativement les émissions de gaz carbonique $CO_2$.

En ce qui concerne le collecteur d'échappement 4, celui-ci récupère les gaz d'échappement issus de la combustion et évacue ces derniers vers l'extérieur, par l'intermédiaire d'un conduit d'échappement des gaz 12 débouchant sur la turbine 8 du turbocompresseur 5 et par une ligne d'échappement 13.

En variante, ce conduit d'échappement des gaz 12 pourrait comporter une soupape de décharge (non représentée), de manière à moduler la puissance fournie par les gaz d'échappement à la turbine 8.

La ligne d'échappement 13 illustré sur la figure 1 comporte un filtre à particules 14 ainsi qu'un convertisseur catalytique d'oxydation 15, dit « Diesel oxidation catalyst » en termes anglo-saxons, disposé en amont du filtre à particules 14 et assurant essentiellement une oxydation des molécules réductrices constituées par le monoxyde de carbone (CO) et les hydrocarbures imbrûlés (HC). Ce convertisseur catalytique 15 est connu de l'homme du métier et ne sera pas davantage décrit. On notera néanmoins qu'il possède une structure monolithique et est pourvu de canaux imprégnés d'une phase catalytique, telle qu'un métal précieux, et présentant une grande surface de contact avec les gaz d'échappement. En variante, le monolithe entrant dans la constitution du convertisseur catalytique 15 peut être intégré au filtre à particules 14 afin de réaliser un couplage entre le post-traitement des gaz d'échappement par oxydation du monoxyde de carbone et des hydrocarbures imbrûlés au post-traitement des particules. En variante du convertisseur catalytique d'oxydation 15, on pourrait prévoir un autre organe de traitement 15 d'effluents de gaz d'échappement, notamment un piège à oxydes d'azote associé au filtre à particules 14, permettant de réduire les oxydes d'azote (NOx) émis par le moteur 1 en molécules innofensives d'azote et d'eau sous l'action d'hydrocarbures provenant du moteur.

Un premier circuit de recirculation 16 des gaz d'échappement haute pression, comprenant une partie du circuit d'alimentation 11 du moteur 1 et une partie du circuit d'échappement 4, récupère une partie des gaz d'échappement et les réinjecte dans le collecteur d'admission d'air 3, afin de limiter la quantité d'oxydes d'azote produits par la combustion tout en évitant la formation de fumée dans les gaz d'échappement. Tel qu'illustré, le premier circuit de recirculation 16 comporte essentiellement une soupape 16a de réglage du flux de gaz d'échappement recirculés.

Un deuxième circuit de recirculation 17 des gaz d'échappement basse pression, récupère une partie des gaz d'échappement en aval du filtre à particules 14 et les réinjecte dans le système de turbo compression 5. Tel qu'illustré, le deuxième circuit de recirculation 17 comporte essentiellement un filtre 18, un refroidisseur 19 et une soupape de réglage 17a du flux de gaz d'échappement recirculés refroidis. Les gaz d'échappement recirculés refroidis sont ensuite mélangés à l'air frais admis dans la conduite 6 dans un mélangeur 20. L'intégration d'un deuxième circuit de refroidissement, dit « boucle froide » permet de réduire les émissions de gaz carbonique $CO_2$ d'environ 3% en augmentant le taux de recirculation des hydrocarbures imbrûlés en maîtrisant la température et la pression à l'admission.

Un capteur d'oxygène 21, de type proportionnel, est situé en aval de la turbine 8 et en amont du convertisseur catalytique 15. Le signal de sortie du capteur d'oxygène 21 est mis en forme dans une unité de commande électronique, « UCE », ou calculateur embarqué 30. Ce signal contient une information sur la teneur en oxygène résiduel des gaz d'échappement et également sur le rapport momentané de carburant et d'air du mélange aspiré par le moteur 1. Le rapport air/carburant est également appelé « richesse ». L'unité de commande électronique 30 récupère, par des connexions non représentées, également d'autres informations telles que, par exemple, la température de l'air dans le collecteur d'admission 3 du moteur 1, la température de l'eau de refroidissement du moteur, le débit de l'air entrant dans le collecteur d'admission 3, la vitesse de rotation du moteur, de la vitesse du véhicule, des paramètres d'injection, la température de sortie $T_m$ du convertisseur catalytique 15.

L'unité de commande ou calculateur embarqué 30 assure essentiellement le contrôle du fonctionnement du moteur 1, notamment le réglage de ses paramètres de fonctionnement, ainsi que le contrôle du fonctionnement du convertisseur catalytique 15.

Plus particulièrement, l'unité de commande 30 effectue un diagnostic de l'état de fonctionnement du convertisseur catalytique 15 afin de détecter un vieillissement trop important pouvant engendrer une augmentation des émissions polluantes, voire une impossibilité de régénérer le filtre à particules 14.

Avant d'effectuer le contrôle de l'état de fonctionnement du convertisseur catalytique 15, il est nécessaire de procéder à un contrôle de conditions préalables avant de lancer l'étape de post-injection de carburant. L'unité de commande 30 comprend à cet effet un module de vérification 31 des conditions du moteur 1 permettant de vérifier notamment le point de fonctionnement du moteur, tel que la vitesse de rotation du moteur, la demande de couple du conducteur ainsi que la quantité de carburant injecté.

L'unité de commande 30 comprend en outre un module d'injection de carburant 32 en amont du convertisseur catalytique 15 et un module de diagnostic 33 du convertisseur catalytique 15.

Lorsque les conditions du fonctionnement du moteur sont vérifiées, on peut procéder à l'étape d'injection tardive de carburant. La quantité de carburant est maintenue constante lors de l'excitation.

Pendant l'étape de post-injection de carburant, on mesure la valeur de richesse λ du mélange air/carburant mesurée par le capteur d'oxygène 21 située en amont du convertisseur catalytique 15.

La valeur mesurée de richesse λ d'un mélange air/carburant correspond à une composante de premier ordre de la température résultante du phénomène d'exotherme du convertisseur catalyseur lors d'une injection tardive.

En effet, selon les équations thermodynamiques du dégagement de la chaleur d'un convertisseur catalytique, on obtient :

$$\underbrace{m_s Cp_s \frac{dT}{dt}}_{\text{Elevation de Température}} = \underbrace{\dot{m}_g Cp_g \left(T_i - T\right)}_{\text{Echange Gaz-Solide}} + \underbrace{X\lambda\Delta_H\dot{m}_g}_{\text{Production de Chaleur}} - \underbrace{P}_{\text{Pertes thermiques dans le monolithe}}$$

$$\textbf{(eq. 1)}$$

Avec :

$m_s$, la masse du monolithe

$Cp_s$, le pouvoir calorifique du monolithe

$T$, la température du convertisseur catalytique

$\dot{m}_g$, le débit massique de gaz

$T_i$, la température d'entrée du convertisseur catalytique

X, la fraction de gaz convertie

λ, la richesse du mélange air/carburant

$\Delta_{H,}$ la variation d'enthalpie

En appliquant la méthode de variation des constantes afin de résoudre l'équation différentielle eq.2, on définit la solution générale eq.4 de l'équation homogène associée eq.3, sans second membre :

$$\frac{dT}{dt} + \dot{m}_g \underbrace{\frac{Cp_g}{m_s Cp_s}}_{K1} T = \dot{m}_g \underbrace{\frac{Cp_g}{m_s Cp_s}}_{K1} T_i + \underbrace{\frac{\Delta_H}{m_s Cp_s}}_{K2} X\lambda\dot{m}_g - \underbrace{\frac{Pertes}{m_s Cp_s}}_{K3} \qquad \text{(eq.2)}$$

Où K1, K2, K3 sont des constantes.

$$\frac{dT}{dt} + \dot{m}_g K_1 T = 0 \qquad \text{(eq.3)}$$

$$T = Ke^{-\dot{m}_g K_1(t)} \qquad \text{(eq.4)}$$

Où K est une constante réelle.
Ainsi, on obtient une nouvelle fonction variable k définie par l'équation :

$$T(t) = k(t)e^{-\dot{m}_g K_1(t)} \qquad \text{(eq.5)}$$

En reportant la fonction k dans l'équation eq.2, on obtient :

$$k'(t)e^{-\dot{m}_g K_1(t)} = \dot{m}_g K_1 T_i + K_2 X\lambda\dot{m}_g - K_3 \qquad \text{(eq.6)}$$

Par intégration de la fonction k(t), on obtient l'équation suivante :

$$k(t) = \int \left( \dot{m}_g K_1 T_i + K_2 X\lambda\dot{m}_g - K_3 \right) e^{\dot{m}_g K_1 t} dt \qquad \text{(eq.7)}$$

D'où :

$$K = \left( T_i + \frac{K_2}{K_1} X\lambda - \frac{K_3}{\dot{m}_g K_1} \right) e^{\dot{m}_g K_1 t} + C \qquad \text{(eq.8)}$$

Avec C, une constante
On en déduit :

$$T = \left( T_i + \frac{K_2}{K_1} X\lambda - \frac{K_3}{\dot{m}_g K_1} \right) + Ce^{-\dot{m}_g K_1 t} \qquad \text{(eq.9)}$$

Afin de déterminer la valeur de la constante C, on se place à T=T$_i$ :

$$C = -\frac{K_2}{K_1} X\lambda + \frac{K_3}{\dot{m}_g K_1} \qquad \text{(eq.10)}$$

En remplaçant la valeur de C dans l'équation eq.9, on obtient l'équation finale de la température :

$$T = T_i + \left( \frac{K_2}{K_1} X\lambda - \frac{K_3}{K_1 \dot{m}_g} \right) \left( 1 - e^{\frac{-\dot{m}_g K_1 t}{K''}} \right) \qquad \textbf{(eq.11)}$$

On constate ainsi que la température T du convertisseur catalytique 15 dépend de la valeur de richesse $\lambda$.

La figure 2 illustre en détail le module de diagnostic 33, partie de l'unité de commande 30 de la figure 1.

Le module de diagnostic 33 reçoit en entrée la température $T_m$ mesurée en sortie du convertisseur catalytique 15 et la valeur de richesse $\lambda$ du mélange air/carburant mesurée par le capteur d'oxygène 21 situé en amont du convertisseur catalytique 15.

Le module de diagnostic 33 comprend un modèle 34 d'organe de traitement dépourvu d'activité catalytique délivrant une température estimée $T_e$ en sortie d'un convertisseur catalytique défaillant.

Le module de diagnostic 33 comprend un module de calcul 35 de la différence entre la température $T_e$ de sortie dudit modèle 34 et la valeur de température $T_m$ mesurée en sortie du convertisseur catalytique 15.

Le module de diagnostic 33 comprend également un module d'élaboration 36 d'un premier critère de diagnostic $C_1$ basé sur l'utilisation du modèle de convertisseur inerte 34, c'est-à-dire dépourvu d'activité catalytique, afin de déterminer la température de sortie $T_e$ d'un tel modèle 34.

Le module d'élaboration 36 d'un premier critère de diagnostic $C_1$ comprend à cet effet un intégrateur (non représenté) afin de calculer la valeur moyenne de l'activité catalytique résiduelle correspondant au premier critère de diagnostic $C_1$:

$$C_1 = \int (T_m - T_e) dt \qquad \textbf{(eq.20)}$$

Afin de s'affranchir des variations de la température T et de richesse $\lambda$ du mélange air/carburant en fonction du fonctionnement du moteur 1 et des conditions environnementales, on détermine un critère final de diagnostic $C_f$ dans un module d'élaboration 37 d'un critère final de diagnostic $C_f$ correspondant à la division de la différence de température $T_m$ -$T_e$ par la valeur moyenne $\lambda_m$ de richesse calculée dans un bloc de calcul de la moyenne 38 à partir du signal du capteur d'oxygène 21 situé en amont du convertisseur catalytique 15 pendant la phase de post injection d'hydrocarbures.

Ainsi, on obtient le critère final $C_f$ de diagnostic:

$$C_f = \int \frac{(T_m - T_e)}{\lambda_m} dt \qquad \textbf{(eq.21)}$$

Lorsque la richesse $\lambda$ du mélange est faible, par exemple lorsqu'il y a peu de gaz d'échappement, l'exotherme (c'est-à-dire la quantité d'énergie) généré par l'étape de post-injection est faible. La division de l'écart de température $T_m$ -$T_e$ par la richesse $\lambda$ permet d'augmenter la valeur du critère final de diagnostic $C_f$. A l'inverse, lorsque la richesse $\lambda$ du mélange est importante, par exemple lorsqu'il y a beaucoup de gaz d'échappement, l'exotherme généré par l'étape de post-injection est important. La division de l'écart de température par la richesse $\lambda$ permet alors de réduire la valeur du critère final de diagnostic $C_f$.

On obtient donc un critère final de diagnostic $C_f$ global qui reste stable en fonction des variations de la valeur de la richesse du mélange $\lambda$.

La valeur du critère final $C_f$ est ensuite comparée dans un bloc de comparaison 39 à une valeur de seuil S traduisant de la baisse de performance du convertisseur catalytique 15. Le résultat de cette comparaison est stocké dans la mémoire de l'unité de commande 30 ou calculateur embarqué et peut, lorsque la valeur du critère final $C_f$ est inférieure à la valeur de seuil S, servir à avertir le conducteur d'un dysfonctionnement D du convertisseur catalytique 15 ou, de manière générale d'un autre organe de traitement 15 d'effluents des gaz d'échappement, par exemple d'un piège à oxydes d'azote.

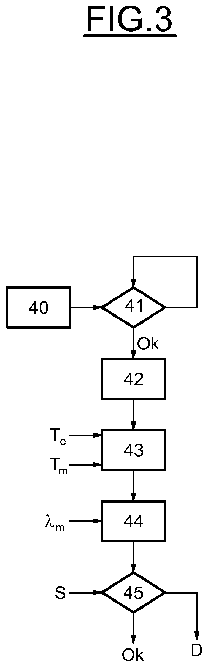

L'organigramme représenté sur la figure 3 illustre un exemple de procédé mis en oeuvre par le dispositif représenté sur la figure 2.

Après émission d'une requête de diagnostic (étape 40), l'unité de commande 30 vérifie à l'étape 41 que les conditions du fonctionnement du moteur précédemment évoquées sont satisfaites.

Si c'est le cas, on procède à la post-injection pendant une durée déterminée (étape 42). Le débit massique d'hydrocarbures injectés est maintenu constant en amont du convertisseur catalytique 15 pendant toute la durée de l'étape de post-injection.

On calcule à l'étape 43 le premier critère de diagnostic $C_1$ en fonction de la température estimée $T_e$ en sortie du modèle 34 d'organe de traitement défaillant et de la valeur de la température $T_m$ mesurée en sortie du convertisseur catalytique 15.

A l'étape 44, on élabore un critère final de diagnostic $C_f$ en fonction d'une valeur moyenne $\lambda_m$ de richesse calculée à partir de la valeur de richesse $\lambda$ provenant du capteur d'oxygène 21 et du premier critère de diagnostic $C_1$.

Enfin, on procède, à l'étape 45, à la comparaison du critère final de diagnostic $C_f$ avec une valeur de seuil S traduisant de la baisse de performance du convertisseur catalytique 15.

On considère alors que le catalyseur n'est pas dégradé (« OK ») si l'activité catalytique est supérieure à la valeur de seuil S. Dans le cas contraire, on considère que le convertisseur catalytique est dégradé et un défaut D apparait sur l'écran de contrôle du tableau de commande du véhicule automobile (non représenté).

Le but de cette étape est de connaitre l'activité catalytique du convertisseur catalytique 15 par comparaison de la température de sortie $T_m$ mesurée en aval du convertisseur catalytique 15 et de la température estimée $T_e$ en aval d'une ligne d'échappement de référence dépourvue de convertisseur catalytique, en sortie du modèle 34.

Grace à l'invention, on bénéficie d'un contrôle de l'état de fonctionnement du convertisseur catalytique efficace et robuste en fonction des variations de la richesse et de l'exotherme. De plus, un tel contrôle est adaptable à tous types de véhicules à moteur Diesel comprenant un capteur à oxygène de type proportionnel en amont du convertisseur catalytique.

## Revendications

1. Dispositif de contrôle de l'état de fonctionnement d'un organe de traitement d'effluents gazeux (15) d'une ligne d'échappement (13) dans un moteur (1) à combustion interne comprenant une unité de commande (30) comportant un module de vérification (31) des conditions de fonctionnement du moteur (1), un module d'injection (32) de carburant en amont de l'organe de traitement (15) et un module de diagnostic (33) de l'organe de traitement (15), ledit module de diagnostic (33) comportant un modèle (34) d'organe de traitement dépourvu d'activité catalytique et un module de calcul (35) d'un écart entre la température de sortie ($T_e$) dudit modèle et une valeur mesurée ($T_m$) de température de sortie de l'organe de traitement (15), **caractérisé en ce que** le module de diagnostic (33) comprend un module d'élaboration (37) d'un critère de diagnostic ($C_f$) en fonction de l'écart de température ($T_m - T_e$) et d'une valeur de richesse ($\lambda$) du mélange air/carburant mesurée par un capteur d'oxygène (21) situé en amont de l'organe de traitement (15), correspondant à l'intégrale temporelle de l'écart de température ($T_m - T_e$) divisé par la valeur moyenne de la richesse ($\lambda_m$).

2. Dispositif de contrôle selon la revendication 1, dans lequel le module de diagnostic (33) comprend un module de comparaison (39) du critère de diagnostic ($C_f$) avec une valeur de seuil (S) traduisant de la baisse de performance de l'organe de traitement (15).

3. Dispositif de contrôle selon l'une quelconque des revendications précédentes, dans lequel la quantité de carburant est maintenue constante lors de l'excitation.

4. Dispositif de contrôle selon l'une quelconque des revendications précédentes, dans lequel le capteur d'oxygène (21) est situé en aval d'une turbine (8) du système de turbo compression (5) du moteur (1).

5. Procédé de contrôle de l'état de fonctionnement d'un organe de traitement (15) d'effluents gazeux d'une ligne d'échappement (13) dans un moteur à combustion interne (1) de véhicule automobile, dans lequel on excite l'organe de traitement (15) par injection de carburant en amont de l'organe de traitement (15) et on calcule un écart ($T_m - T_e$) entre une température de sortie ($T_e$) d'un modèle (34) d'organe de traitement dépourvu d'activité catalytique et une valeur mesurée ($T_m$) de température de sortie de l'organe de traitement (15), **caractérisé en ce qu'**on élabore un critère de diagnostic ($C_f$) en fonction de l'écart de température calculé ($T_m - T_e$) et de la valeur de richesse ($\lambda$) du mélange air/carburant mesurée par un capteur d'oxygène (21) situé en amont de l'organe de traitement (15), le critère de diagnostic ($C_f$) étant calculé par intégration temporelle de l'écart de température ($T_m - T_e$) divisé par la valeur moyenne de la richesse ($\lambda_m$).

6. Procédé de contrôle selon la revendication 5, dans lequel on compare le critère de diagnostic ($C_f$) avec une valeur de seuil (S) traduisant de la baisse de performance de l'organe de traitement (15).

**Patentansprüche**

1. Vorrichtung zur Überwachung des Funktionszustands eines Organs zur Behandlung von gasförmigen Emissionen (15) einer Abgasanlage (13) in einem Verbrennungsmotor (1), umfassend eine Überwachungseinheit (30), umfassend ein Modul (31) zur Verifikation von Funktionszuständen des Motors (1), ein Modul (32) zur Einspritzung von Kraftstoff stromaufwärts von dem Behandlungsorgan (15) und ein Modul (33) zur Diagnose des Behandlungsorgans (15), wobei das Diagnosemodul (33) ein Modell (34) des Behandlungsorgans ohne katalytische Aktivität und ein Modul (35) zur Berechnung einer Abweichung zwischen der Ausgangstemperatur ($T_e$) des Modells und einem Messwert ($T_m$) der Ausgangstemperatur des Behandlungsorgans (15) umfasst, **dadurch gekennzeichnet, dass** das Diagnosemodul (33) ein Modul (37) zur Ausarbeitung eines Diagnosekriteriums ($C_f$) als Funktion der Temperaturabweichung ($T_m$ - $T_e$) und eines Anreicherungswerts ($\lambda$) des Luft/Kraftstoff-Gemischs, gemessen durch einen Sauerstoffsensor (21), der stromaufwärts von dem Behandlungsorgan (15) angeordnet ist, entsprechend dem Zeitintegral der Temperaturabweichung ($T_m$ - $T_e$), geteilt durch den Anreicherungsmittelwert ($\lambda_m$), umfasst.

2. Überwachungsvorrichtung nach Anspruch 1, wobei das Diagnosemodul (33) ein Modul (39) zum Vergleichen des Diagnosekriteriums ($C_f$) mit einem Schwellenwert (S) umfasst, der das Absinken der Leistung des Behandlungsorgans (15) anzeigt.

3. Überwachungsvorrichtung nach einem der vorhergehenden Ansprüche, wobei die Menge an Kraftstoff bei der Anregung konstant gehalten wird.

4. Überwachungsvorrichtung nach einem der vorhergehenden Ansprüche, wobei der Sauerstoffsensor (21) stromabwärts von einer Turbine (8) des Turbokompressionssystems (5) des Motors (1) angeordnet ist.

5. Verfahren zur Überwachung des Funktionszustands eines Organs (15) zur Behandlung von gasförmigen Emissionen einer Abgasanlage (13) in einem Verbrennungsmotor (1) eines Kraftfahrzeugs, wobei das Behandlungsorgan (15) durch das Einspritzen von Kraftstoff stromaufwärts von dem Behandlungsorgan (15) angeregt wird, und eine Abweichung ($T_m$ - $T_e$) zwischen einer Ausgangstemperatur ($T_e$) eines Modells (34) des Behandlungsorgans ohne katalytische Aktivität und einem Messwert ($T_m$) der Ausgangstemperatur des Behandlungsorgans (15) berechnet wird, **dadurch gekennzeichnet, dass** ein Diagnosekriterium ($C_f$) als Funktion der berechneten Temperaturabweichung ($T_m$ - $T_e$) und des Anreicherungswerts ($\lambda$) des Luft/Kraftstoff-Gemischs, gemessen durch einen Sauerstoffsensor (21), der stromaufwärts von dem Behandlungsorgan (15) angeordnet ist, ausgearbeitet wird, wobei das Diagnosekriterium ($C_f$) durch Zeitintegration der Temperaturabweichung ($T_m$ - $T_e$), geteilt durch den Anreicherungsmittelwert ($\lambda_m$), berechnet wird.

6. Überwachungsverfahren nach Anspruch 5, wobei das Diagnosekriterium ($C_f$) mit einem Schwellenwert (S) verglichen wird, der das Absinken der Leistung des Behandlungsorgans (15) anzeigt.

**Claims**

1. Device for monitoring the state of operation of a gas effluent treatment member (15) of an exhaust line (13) in an internal combustion engine (1) comprising a control unit (30) comprising a module (31) for checking the conditions of operation of the engine (1), a module (32) for injecting fuel upstream of the treatment member (15) and a diagnostic module (33) for the treatment member (15), said diagnostic module (33) comprising a model (34) of a treatment member without catalytic activity and a module (35) for computing a difference between the output temperature ($T_e$) of said model and a measured value ($T_m$) of the output temperature of the treatment member (15), **characterized in that** the diagnostic module (33) comprises a module (37) for generating a diagnostic criterion ($C_f$) as a function of the temperature difference ($T_m$ - $T_e$) and of an air/fuel mixture richness value ($\lambda$) measured by an oxygen sensor (21) situated upstream of the treatment member (15), corresponding to the time integral of the temperature difference ($T_m$ - $T_e$) divided by the average richness value ($\lambda_m$).

2. Monitoring device according to Claim 1, in which the diagnostic module (33) comprises a module (39) for comparing the diagnostic criterion ($C_f$) with a threshold value (S) reflecting the drop in performance of the treatment member (15).

3. Monitoring device according to either one of the preceding claims, in which the quantity of fuel is kept constant during excitation.

4. Monitoring device according to any one of the preceding claims, in which the oxygen sensor (21) is situated downstream of a turbine (8) of the turbo compression system (5) of the engine (1).

5. Method for monitoring the state of operation of a gas effluent treatment member (15) of an exhaust line (13) in an internal combustion engine (1) of a motor vehicle, in which the treatment member (15) is excited by injection of fuel upstream of the treatment member (15) and a difference ($T_m$ - $T_e$) is computed between an output temperature ($T_e$) of a model (34) of a treatment member without catalytic activity and a measured value ($T_m$) of the output temperature of the treatment member (15), **characterized in that** a diagnostic criterion ($C_f$) is generated as a function of the computed temperature difference ($T_m$ - $T_e$) and of the air/fuel mixture richness value ($\lambda$) measured by an oxygen sensor (21) situated upstream of the treatment member (15), the diagnostic criterion ($C_f$) being computed by time integration of the temperature difference ($T_m$ - $T_e$) divided by the average richness value ($\lambda_m$).

6. Monitoring method according to Claim 5, in which the diagnostic criterion ($C_f$) is compared with a threshold value (S) reflecting the drop in performance of the treatment member (15).

EP 2 992 193 B1

# FIG.1

# FIG.2

# FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1323905 A
- FR 2918113
- FR 2914693
- EP 1052385 A